# EUROPEAN PATENT SPECIFICATION

(11) **EP 1 378 139 B1**
(45) Date of publication and mention of the grant of the patent: **08.07.2009**
(21) Application number: 02703026.1
(22) Date of filing: 12.03.2002
(51) Int. Cl.: H04M 3/42

(54) **A TELECOMMUNICATIONS-RELATED SYSTEM**
EIN DIE TELEKOMMUNIKATION BETREFFENDES SYSTEM
SYSTEME AFFERENT AUX TELECOMMUNICATIONS

(30) Priority: 12.03.2001 SE 0100834
(43) Date of publication of application: 07.01.2004
(73) Proprietor: OneAlyze Sweden AB, 11866 Stockholm (SE)
(72) Inventor: SIMONSSON, Bengt, Carl, Gösta, S-165 71 Hässelby (SE)
(74) Representative: Karlsson, Leif Karl Gunnar
(86) International application number: PCT/SE2002/000446
(87) International publication number: WO 2002/074004

(56) References cited:
- WO-A2-00/70886
- US-A- 5 206 899
- US-A- 5 873 030
- US-A- 5 913 165

## Description

### Field of invention

The present invention relates generally to a telecommunications-related system and more particularly to such a system that includes a number of call-initiatable and call-connectable telephone apparatus or telephone sets, that have subscriber related numbers, and a number of callable apparatus, that have subscriber related numbers as stated in the preamble of claim 1.

Every person skilled in this field will be well aware of the fact that this type of telecommunications-related system is complex, and will therefore agree with the simplification chosen with regard to the following description.

Each person skilled in this art will also be well aware of the alternatives that can be included by the technical equivalents included by expressions corresponding to "one or more telephone exchange units", such as data networks (Internet), electrical and/or electronic switching networks, etc.

### Description of the background art

Several different types of methods and arrangements of the aforesaid nature and having the aforesaid functions are earlier known to the art.

Telecommunications-related systems are earlier known in a large number of more or less complex designs, wherein the present invention is based on a particular application, which has required the use of a number of particular system-related functions.

For example, there is known to the art a telecommunications system marketed by OneDial Interactive AB, Uppsala, Sweden, in which each caller within an adapted geographic area who initiates or activates a predetermined call number (a group number) will be connected to the nearest geographical sales point, regardless of the geographic position of the caller within the adapted geographic area.

In principle, the present invention can be seen as a further development of this earlier known system.

Also known to the art is a telecommunications system in which a person, calling a predetermined number or group number connected to a "taxi service" via means assigned to the telephone exchange, can be connected to a nearby taxi which is free at that time and which is equipped with a mobile telephone.

Systems of this nature require co-operation between a stationary telecommunications system, to which a manned subscriber exchange has been connected, and a mobile telecommunications system.

A system of this kind is illustrated and described in more detail in European Patent Publication 91 92 0799.3 (0 559 712).

With regard to the characteristic features of the present invention, it can be mentioned that it is known within another technical field in respect of a TV (television) application, or an "Internet" application, to create conditions in which advertisements can be directed to viewers or consumers in relation to earlier obtained and stored demographic information.

It is said that in order to be able to "direct" advertisements and commercial plugs to selected consumers, it is necessary to obtain relative information concerning the consumers lifestyle, age, sex, purchasing habits, etc., in some way or another.

An example of such a system is described in more detail in International Patent Publication WO-A1-00/33228, in which the earlier standpoint of techniques disclosed in this document can also be considered relevant to the measures taken within this technical field.

The content of the patent publications WO-A2-0070886, US-A-5 873 030, US-A-5 913 165 and US-A-5 206 899 also farm part of the prior art.

### Summary of the invention

### Technical problems

When taking into consideration the technical deliberations that a person skilled in this particular art must make in order to provide a solution to one or more technical problems that he/she encounters, it will be seen that on the one hand it is necessary initially to realise the measures and/or the sequence of measures that must be undertaken to this end, and on the other hand to realise which means is/are required to solve one or more of said problems.

In the case of a telecommunications-related system comprising a number of call-initiatable and call-connectable apparatus with associated subscriber numbers, as stated in the preamble of claim 1, it will be seen that a technical problem resides in the ability to realise the significance of and the advantages associated with enabling an incoming call to be coupled to a chosen callable number where the choice of the callable subscriber number (the extension number) shall be changed and therewith be at least partially dependent on evaluated and/or obtained demographic information assigned to the calling party.

When the telecommunications-related system is based on said telephone exchange unit comprising or being connected to means for connecting a call from a call-initiatable apparatus with its subscriber number to a called apparatus which has a subscriber number and which answers said call, and where said means also includes an A-number identification circuit, it will be seen that a technical problem resides in the ability to realise the significance of and the advantages afforded by allowing each call to a group number to be connected to a nearby and/or separate appropriate receiver, that has a system-associated callable number.

Another technical problem is one of being able to realise the significance of and the advantages afforded by using a further means related to said exchange unit which, upon receipt of a call to a chosen callable number functions to connect said call to a related callable apparatus separate from the chosen called number, in dependence on an evaluated A-number identification and available, stored and/or calculated demographic information related to said A-number identification either totally or partially.

Another technical problem resides in the ability to realise the significance of and the advantages associated with allowing the chosen callable number to be the same for all call-activated apparatus or at least group-related apparatus.

Another technical problem is one of being able to realise the significance of and the advantages afforded by carrying out in a register in respect of each calling and A-number identified apparatus a check to determine the demographic information given in said register with respect to the A-number concerned, and also to check that said demographic information is weighted, has been given different meanings and/or degrees of desirability or urgency, and that a call can be made to a callable apparatus which is unequivocally related to said weighted demographic information or pieces of information and/or is generally related thereto.

A further technical problem resides in the ability to realise the significance of and the advantages associated with allowing the callable apparatus to consist of one apparatus among several selectable apparatus, where all said apparatus may conveniently be assigned a group membership.

Another technical problem resides in the ability to realise the significance of and the advantages that are afforded by choosing that callable apparatus which has allocated in a system associated memory a geographical position which lies close to those geographical positions that are pertinent with regard to an area within which said calling apparatus is situated.

A further technical problem resides in the ability to realise the significance of and the advantages that are afforded by allowing said further means to include a first memory, which includes a plurality of callable apparatus with associated subscriber numbers, said apparatus being co-ordinated and/or situated within a limited area.

Another technical problem resides in the ability to realise the significance of and the advantages that are afforded by including in said further means a second memory, in which geographical positions applicable to a well-defined and clearly limited area are stored.

Still another technical problem resides in the ability to realise the significance of and the advantages afforded by including in said further means a third memory, in which there is stored one or more demographic information relevant generally to persons whose accommodation addresses correspond to the geographical positions applicable within a limited area.

A technical problem also resides in the ability to realise the significance of and the advantages afforded by including in said further means a fourth memory in which there is stored demographic information related directly to the registered owner of the subscriber apparatus.

Another technical problem resides in the ability to realise the significance of and the advantages afforded by selecting a callable, such as an unengaged, apparatus depending on the content of one or more memories, with the aid of a circuit co-ordinated with said further means.

Another technical problem resides in the ability to realise the significance of and the advantages afforded by choosing by calculation a callable apparatus, such as an unengaged apparatus, whose memory-stored geographic position lies closest to the memory-stored geographical positions applicable to the calling apparatus, with the aid of a circuit adapted to this end.

Another technical problem resides in the ability to realise the significance of and the advantages afforded by including a circuit and a circuit-related device or means with which a call to an indicated, but engaged, apparatus can be switched to a next nearest situated apparatus or a next relevant unengaged apparatus.

A technical problem also resides in the ability to realise the significance of and the advantages afforded by allowing different callable apparatus to represent different services and to connect the call to an apparatus corresponding to indicated demographic information and/or other stored data.

A technical problem also resides in the ability to realise the significance of and the advantages afforded by selecting a callable apparatus with associated salesmen in accordance with stored information other than said stored demographic information.

### Solution

As before mentioned, the present invention takes as its starting point the known technique in which a telecommunications-related system includes a number of call-initiatable and call-connectable apparatus having associated subscriber numbers, and a number of callable apparatus having associated subscriber numbers, and a telephone exchange unit that can be connected to said apparatus, as stated in the preamble of claim 1.

With the intention of solving one or more of the aforesaid technical problems, it is particularly proposed in accordance with the invention that the known technology shall be supplemented with features stated in the characterising part of claim 1.

By way of proposed embodiments that lie within the concept of the invention, it is proposed features related to the subclaims.

### Advantages

The advantages primarily characteristic of the present invention and its particular significant features reside in the creation of conditions which enable one or several means, associated with a telephone exchange unit, to route (each) call arriving at a group number to an apparatus called by the exchange unit, wherein the choice of the subscriber number of the callable apparatus is at least partially dependent on stored demographic information concerning the calling apparatus.

The invention is presumed to find particularly appropriate application in a system in which a consumer initiates a call to a group number with regard to a query and/or a planned purchase of one or more capital goods, and where the consumer is connected automatically to an unengaged sales person chosen and indicated by various criteria, preferably to a sales person who is stationed and therewith situated within the immediate surroundings of the consumer.

The system enables a consumer to be connected by the telephone exchange unit to a callable subscriber number on the basis of existing stored and/calculated demographic information, said subscriber number being served by a sales person or a person who has been indicated as being particularly suited to serve the calling consumer, on the basis of different criteria.

### Brief description of the drawings

A proposed embodiment having features characteristic of the present invention will now be described in more detail by way of example with reference to the accompanying drawings, in which;
Figure 1 is a block diagram illustrating schematically the fundamental conditions of the present invention; and
Figure 2 is a block diagram, which illustrates the structure of a used additional means in greater detail.

### Description of embodiments at present preferred

It is pointed out initially that we have chosen to use in the following description of embodiments at present preferred and including significant characteristic features of the invention and illustrated in the figures of the accompanying drawings special terms and terminology with the intention of illustrating the inventive concept more clearly.

However, it will be noted that the expressions chosen here shall not be seen as limited solely to the chosen terms used in the description, but that each term chosen shall be interpreted as also including all technical equivalents that function in the same or at least essentially the same way so as to achieve the same or essentially the same function and/or intention.

Thus, access to stored or calculated demographic information/data or criteria is of particular importance in practising the invention.

Demographic information and criteria can also include other data and criteria that would normally lie outside a strict definition, such as requirement-related criteria or other criteria.

It will also be understood that in the case of certain applications, exclusively demographic information and criteria will be used to indicate a callable apparatus with associated subscriber or extension owners, while the demographic information may be combined more or less with other criteria in the case of other applications.

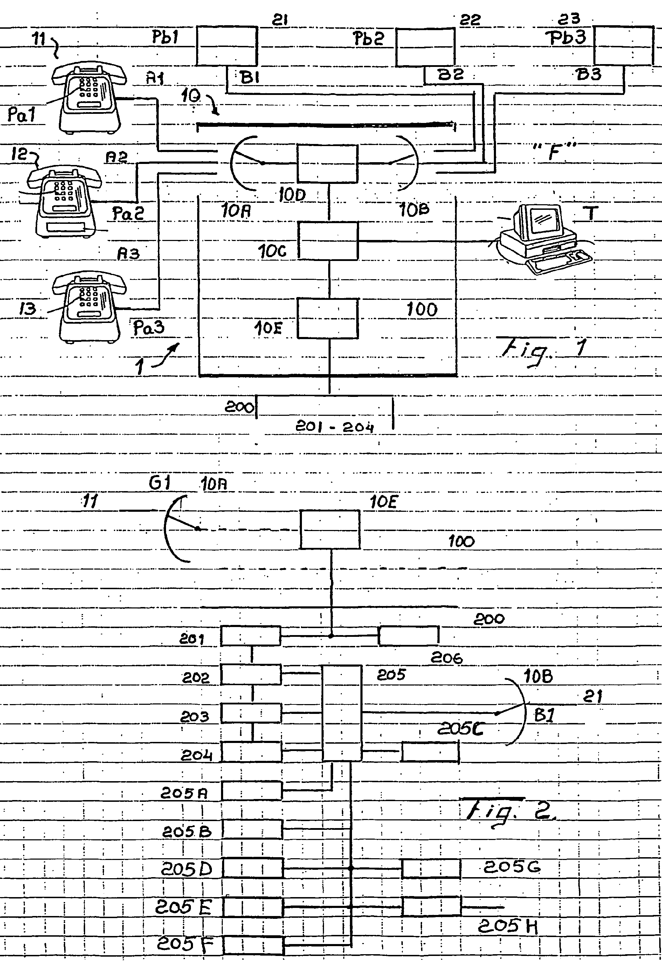

Figure 1 is a simplified block diagram, which illustrates schematically a telecommunications-related system 1, that includes a number of call-initiatable and call-connectable apparatus with their associated subscriber numbers. In the illustrated embodiment, three apparatus 11, 12, 13 having respective subscriber numbers A1, A2, A3 are situated at mutually different geographical locations.

These three apparatus 11, 12, 13 are connected to the inputs 10A of an exchange unit 10 via schematically illustrated connections or connection lines.

The system 1 also includes a number of callable apparatus or units 21, 22, 23 and their related subscriber numbers. The illustrated embodiment includes three apparatus or units 21, 22, 23 and their respective allocated subscriber numbers B1, B2, B3 disposed at mutually different geographical locations. These three apparatus 21, 22, 23 are connected to the outputs 10B of the exchange unit 10 via schematically indicated connections or connection lines.

An exchange unit 10 of this kind consists of a complex unit, although its description will be simplified here by solely explaining the features associated with the present invention in greater detail.

For example, in the case of a general application of the telecommunications system 1, a calling apparatus 11, having a subscriber number A1, initiates and activates a call to an apparatus 21, by activating a serial number corresponding to the subscribers number B1.

Similarly, the calling apparatus 11 can activate a call to the apparatus 22, by activating a serial number corresponding to the subscribers number B1.

In simple words, the subscriber number B1 is received in a means 10C belonging to the telephone exchange unit 10, wherewith said means controls requisite connecting elements 10B so that the apparatus 11 will be connected to the apparatus 21, or to the apparatus 22, by a speech channel, via an input 10A and an output 10B.

With regard to the inventive application, the exchange unit 10 may conveniently consist of a private branch exchange, that includes a telephone operator service (T) in respect of calls that cannot be forwarded automatically.

In the case of this application, the apparatus or the units 21, 22, 23 can be referred to as extension telephone apparatus or extension sets.

The invention finds application in respect of both subscriber numbers and extension numbers.

The present invention thus requires the provision of a telephone exchange unit 10, which includes or is connected to a first means 100 via which a call, from a call-initiatable apparatus 11 having the subscriber number A1, can be connected to a called apparatus 21 corresponding to said call and having a subscriber number B1, said means 100 also including an A-number identification circuit 10E, in accordance with known technology.

The invention is intended to provide an advancement of the summarily described system 1 and proposes the use of a so-called group number in this regard.

A group number can be considered as a number relating to a private branch exchange 10 or switchboard to which a number of telephone apparatus or sets 11, 12, 13, having respective subscriber numbers A1, A2, A3 can be coupled for automatic connection to an extension set, to a telephone operator or to its equivalent.

The telephone operator T or its equivalent can now connect the call incoming from the apparatus 11 to any one of the apparatus B1, B2 or B3 in accordance with information obtained from the apparatus 11.

With the intention of making the features of the invention still clearer, including the practical application of the invention, the embodiment illustrated in Figure 1 will be concretised by assigning to the apparatus 11 the function of a potential buyer who initiates a call to a company F that has a number of sales personnel, or sales persons, each provided with an individual telephone apparatus or set 21, 22, 23.

It can be assumed that such a query and/or purchase will concern one or more capital goods, such as an automobile, saleable under a given trademark or trade name.

It can also be assumed that vehicles of different sizes and different degrees of exclusiveness are sold under said trademark and that each of the three sales personnel is an expert in this latter regard, and that the telephone apparatus 21 of the sales manager has been assigned the number B1.

The sales person allocated the telephone apparatus 21 is an expert with regard to the most exclusive model, the sales person assigned the telephone apparatus 22 is an expert with regard to an intermediate model, and the sales person assigned the telephone apparatus 23 is an expert with regard to the cheapest model.

A call from the telephone apparatus or set 11 can be connected automatically to the telephone operator T, who is able to connect the call to an appropriate unoccupied sales person, for instance the sales person manning the apparatus 21, in response to a discussion held over a coupled connection.

The invention is based on enabling this procedure to be fully automated.

To this end, it is assumed initially that the telephone apparatus or sets 11, 12 and 13 have different known geographical positions Pa1, Pa2, Pa3 and that the apparatus 21, 22, 23 may also be situated in different geographical positions, such as situated inside one and the same building, as Pb1, Pb2, Pb3, and that each of these apparatus 21, 22, 23 can be called from each of the apparatus 11, 12, 13 via a common group number and connected by a telephone operator T.

It is also assumed that the apparatus 21, 22, 23 are co-ordinated and belong to one and the same sales organisation or company F.

The apparatus 21, 22, 23 may be placed within one and the same building, although on different floors (stories) or in different rooms.

However, it will be seen clearly that in the case of the illustrated embodiment, the apparatus 21, 22, 23 are placed at different geographical positions and not inside one building.

More particularly, these positions may concern retailers located at different geographical sites, such as in different cities, towns, precincts and so on.

In accordance with the invention, the A-number identification circuit 10E, according to Figure 2, co-acts with an additional means or register 200.

This additional means 200 can be illustrated by including a first memory 201, which has stored therein a list of area-related A-numbers, such as all telephone numbers within the limits of a city, a second memory 202, which has stored therein geographical positions, such as the surface area 250 x 250 m within said limits, a third memory 203, which has stored demographic data/information generally relevant to persons that have accommodation addresses within said geographical positions, and a fourth memory 204, which has stored demographic data/information related directly to the registered owner of the subscriber apparatus.

For example, it is shown more clearly in Figure 2 that when a call is received on a chosen callable group number G1 said additional means 200, related to said exchange unit 10, shall function to connect said call to a related callable apparatus 21 different from the chosen called number, in accordance with an evaluated A-number identification 201 and available stored, demographic information 202, 203 or 204 related to the call.

It is also proposed that the chosen callable number G1 is the same for all call-initiated apparatus or at least group-related apparatus.

A check is carried out in the register 200 in respect of each calling and by an A-number identified apparatus 11, so as to evaluate demographic data/information 202, 203 and 204 given in said register in respect of the A-number 201, and to ascertain whether or not said demographic information has been weighted, such as in a circuit 205, and to check that a call is made from the telephone exchange unit 10 to a callable apparatus 21 clearly related to said weighted demographic information, via a chosen output 10B.

The callable apparatus 21 is one of a number of selectable apparatus 22, 23, where all apparatus are allocated a group membership similar for all call-initiated apparatus or at least all group-related apparatus.

Figure 2 illustrates the selection of a callable apparatus 21, such as an unengaged apparatus, through the medium of a circuit 205, either totally or partially in accordance with the stored content of one or more memories 202, 203 and 204 respectively.

The circuit 205 is adapted to select primarily a callable apparatus 21, such as an unengaged apparatus, whose geographical position stored in a memory 205A lies closest to, or is most applicable to, the geographical position of the apparatus 11 stored in the memory 202.

As will be understood, the circuit 205 includes means 205B, which transfers the call to a next nearest apparatus 22 or to a next suitable apparatus 23, when the apparatus 21 is engaged.

When the various apparatus 21, 22, 23 represent the sale of mutually different categories, capital goods, services, exhibition options, models, the invention enables the call to be connected to the apparatus 21 that can best be expected to provide fully adequate service and answers corresponding to the stored demographic information utilised in respect of the connection, in total or partial accord with said demographic data or information.

More particularly, there can be used, in accordance with the invention, a circuit 205C in which call profiles can be stored for subsequent analysis of different call-related criteria and the outcome of calls connected through the exchange unit 10.

A circuit 205D may include a speech response device which, in the absence of identity and geographical position, can present questions and deliver answers for clearer identification of the position of calling apparatus that have selected to keep their own A-number identification secret, or calls from mobile apparatus, and to attempt to evaluate stored demographic information or data from such data.

The billing address of a known customer, or corresponding information, can be determined in a circuit 205E, therewith enabling subscriber-number related demographic information and accommodation address to be established, such as when using a mobile telephone.

The geographical position can be determined via the GPS-system in a circuit 205F, or via the mobile telephone system used.

In a circuit 205G, certain geographical positions and regions can be excluded as being undefinable, wherewith calls made to apparatus within these areas are connected to the telephone operator T, which is able to determine, via speech contact, which callable apparatus can give the best service and forwards the call to such an apparatus, such as the apparatus 22.

Information and data can be taken from a customer database in a circuit 205H, so that when a customer calls his/her requirements can be determined from information already stored in the customer database.

The call can then be connected either to a previous sales person or to a sales person more appropriate to the requirement at that particular time.

The choice of sales person may also be made in accordance with an allocated weighting of one or more criteria, such as connecting to the sales manager 21 in the case of a high point rating.

Returning to the above example, a caller 11 that has good economy, lives in an exclusive area, is given a high weighting and connected to the sales manager 21.

A caller 12 who lives in less exclusive rented accommodation area is given a lower weighting and connected to the sales person 23.

It will be understood that the invention is not restricted to the aforedescribed and illustrated exemplifying embodiment thereof and that modifications can be made within the scope of the inventive concept as illustrated in the accompanying Claims.

## Claims

1. A telecommunications-related system (1) comprising a number of call initiatable and connectable telephone apparatus (11, 12, 13) having respective subscriber numbers (A1, A2, A3), and a number of callable apparatus (21, 22, 23) having respective subscriber numbers (B1, B2,B3), and a telephone exchange unit (10) adapted to be connected to said apparatus, wherein said exchange unit (10) includes or is connected to means (100) for connecting a call from a call-initiatable apparatus (11) with its subscriber number (A1) to a called apparatus (21) with its subscriber number (B1) answering said call, wherein said means (100) also includes an A-number identification circuit (10E), **characterised in that** an additional means (200) related to said exchange unit (10) is adapted to function to connect said call received and chosen callable group number to a callable apparatus, separated from the chosen called number, in accordance with an evaluation of the A-number identification, and available stored and/or calculated demographic information/data, related either totally or partially to said A-number identification; **in that** the chosen callable group number is the same for all call initiating apparatus or at least group-related call initiating apparatus; **in that** the system includes a register (200) which there is carried out a check, for evaluating the demographic information data for the A-number concerned, said check being made in respect of each calling and A-number identified apparatus; **in that** at least some of said demographic information is weighted; and **in that** a call is made to a callable apparatus that is related unequivocally or partially to said weighted demographic information.

2. A system according to Claim 1, **characterised in that** the callable apparatus is one of a number of callable apparatus where all apparatus are allocated a group membership.

3. A system according to Claim 1 or 2, **characterised in that** the callable apparatus is chosen to represent the apparatus that has a geographic position in the close proximity of those geographic positions applicable to said calling apparatus.

4. A system according to Claim 1, **characterised in that** said additional means (200) includes a first memory, which stores a number of callable apparatus with associated subscriber numbers located within a limited or restricted area.

5. A system according to Claim 1, **characterised in that** said additional means (200) includes a second memory, in which geographical positions located within a limited area are stored.

6. A system according to Claim 1 or 5, **characterised in that** said additional means includes a third memory, in which demographic information concerning generally persons that have an accommodation address within the geographical positions applicable within a limited area are stored.

7. A system according to Claim 1, **characterised in that** said additional means includes a fourth memory, in which there is stored demographic information relating directly to the registered owner of the subscriber apparatus.

8. A system according to Claim 1, **characterised by** a circuit which is coordinated with said additional means (200) such as to enable a callable apparatus, such as an unengaged apparatus, to be called totally or partially on the basis of the stored contents of one or more memories.

9. A system according to Claim 1 or 8, **characterised in that** there is chosen with the aid of a circuit a callable apparatus, such as an unengaged apparatus, whose memory-stored geographical position lies closest to the memory-stored geographical position applicable to the calling apparatus.

10. A system according to Claim 1, **characterised in that** in the event of an indicated apparatus being engaged, the call is directed to a next nearest located apparatus with the aid of a circuit and a means related thereto.

11. A system according to Claim 1, **characterised in that** different callable apparatus represent different services; and **in that** the call is connected to an apparatus that corresponds to the indicated demographic information.

12. A system according to Claim 1, **characterised by** a circuit in which call profiles are stored.

13. A system according to Claim 1, **characterised by** a circuit which includes speech response equipment that can ask questions and deliver answers for requisite relevant identification in the absence of identity and geographic position.

14. A system according to Claim 1, **characterised by** a circuit in which the billing address or the like can be determined.

15. A system according to Claim 1, **characterised by** a circuit in which the geographic position can be determined through the medium of a GPS system or through the medium of a mobile telephone system.

16. A system according to Claim 1, **characterised by** a circuit in which certain geographical positions and areas can be excluded as being undefinable.

17. A system according to Claim 1, **characterised by** a circuit in which information can be taken from a customer database so that when a customer calls his/her requirements are determined from information already stored in the customer database.

## Patentansprüche

1. Telekommunikationssystem (1), welches eine Anzahl von Anrufe auslösenden Apparaten und verbindbaren Telefonapparaten (11,12,13) mit jeweiligen Rufnummern (A1,A,2,A3) und eine Vielzahl an anrufbaren Apparaten (21,22,23) mit jeweiligen Rufnummern (B1,B2,B3) und eine Telefonsentralanlage (10) aufweist, welche in der Lage ist, mit den Apparaten verbunden zu werden, wobei die Zentralanlage (10) eine Einrichtung (100) zum Verbinden eines Anrufs von einem einen Anruf auslösenden Apparat (11) mit seiner Rufnummer (A1) zu einem angerufenen Apparat (21) mit seiner den Anruf beantwortenden Rufnummer (B1) aufweist oder damit verbunden ist, wobei die Einrichtung (100) auch einen A-Nummer-Identifikationsschaltkreis (10E) aufweist,
**dadurch gekennzeichnet, dass**
eine zusätzliche Einrichtung (200), die mit der Telefonzentralanlage (10) verbunden ist, so ausgebildet ist, dass sie in der Lage ist, den von einer ausgewählten, anrufbaren Gruppennummer empfangenen Anruf zu einem anrufbaren Apparat zu vereinden, welcher von der ausgewählten, angerufenen Nummer getrennt ist, und zwar in Übereinstimmung mit einer Ermittlung der A-Nummer-Identifikation und zugänglicher, gespeicherter und/oder berechneter demografischer Informationen bzw. Daten, welche entweder vollständig oder teilweise mit der A-Nummer-Identifikation verbunden sind; dass die ausgewählte anrufbare Gruppennummer für sämtliche einen Abruf auslösenden Apparate oder zumindest gruppenbezogene Apparate dieselbe ist, dass das System ein Register (200) aufweist, in welchem eine Prüfung zur Ermittlung der demografischen Information bzw. Daten für die betroffene A-Nummer durchgeführt wird, wobei die Prüfung bezüglich jedes Anrufs und A-Nummer-identifizierten Gerätes durchgeführt wird, dass weinigstens ein Teil der demografischen Informationen gewichtet wird, und dass ein Anruf zu einem anrufbaren Apparat getätigt wird, welcher eindeutig oder teilweise mit der gewichteten demografischen Information verbunden ist.

2. System nach Anspruch 1,
**dadurch gekennzeichnet, dass**
der anrufbare Apparat einer einer Vielzahl von anrufbaren Apparaten ist, wobei allen Apparaten eine Gruppenmitgliedschaft zugeteilt ist.

3. System nach Anspruch 1 oder 2,
**dadurch gekennzeichnet, dass**
der anrufbare Apparat ausgewählt ist, den Apparat zu repräsentieren, welcher eine geografische Position in der unmittelbaren Nähe von denjenigen geografischen Positionen aufweist, die für den anrufenden Apparat anwendbar sind.

4. System nach Anspruch 1,
**dadurch gekennzeichnet, dass**
die zusätzliche Einrichtung (200) einen ersten Speicher aufweist, welcher eine Nummer von anrufbaren Apparaten mit damit verbundenen Rufnummern speichert, die innerhalb eines begrenzten oder gesperrten Bereichs angeordnet sind.

5. System nach Anspruch 1,
**dadurch gekennzeichnet, dass**
die Einrichtung (200) einen zweiten Speicher aufweist, in welchem geografische Positionen, die sich innerhalb eines begrenzten Gebiets befinden, gespeichert sind.

6. System nach Anspruch 1 oder 5,
**dadurch gekennzeichnet, dass**
die zusätzliche Einrichtung einen dritten Speicher aufweist, in welchem demografische Informationen, welche ganz allgemein Personen betreffen, die eine Briefkastenadresse innerhalb der in einem begrenzten Gebiet anwendbaren geografischen Positionen besitzen, gespeichert sind.

7. System nach Anspruch 1,
**dadurch gekennzeichnet, dass**
die zusätzliche Einrichtung einen vierten Speicher aufweist, in welchem demografische Informationen gespeichert sind, die sich direkt auf den eingetragenen Besitzer des Teilnehmergeräts beziehen.

8. System nach Anspruch 1,
**gekennzeichnet durch**
einen Schaltkreis, welcher mit der zusätzlichen Einrichtung (200) derart koordiniert ist, um es einem anrufbaren Apparat, wie zum Beispiel einem freien Apparat, zu ermöglichen, ganz oder teilweise auf der Basis der gespeicherten Inhalte von einem oder mehreren Speichern angerufen zu werden.

9. System nach Anspruch 1 oder 8,
**dadurch gekennzeichnet, dass**
mit der Hilfe eines Schaltkreises eines anrufbaren Apparats, wie zum Beispiel eines freien Apparats, dessen in dem Speicher gespeicherte geografische Position am nächsten zu der in dem Speicher gespeicherten geografischen Position, die für den anrufenden Apparat verwendbar ist, liegt, ausgewählt wird.

10. System nach Anspruch 1,
**dadurch gekennzeichnet, dass**
in dem Fall, dass ein angezeigter Apparat besetzt ist, der Anruf zu einem nächsten, am nähesten gelegenen Apparat mit der Hilfe eines Schaltkreises und einer damit verbundenen Einrichtung weitergeleitet wird.

11. System nach Anspruch 1,
**dadurch gekennzeichnet, dass**
unterschiedliche anrufbare Apparate unterschiedliche Dienstleistungen repräsentieren und dass der Anruf an einen Apparat verbunden wird, welcher der angezeigten demografischen Information entspricht.

12. System nach Anspruch 1,
**gekennzeichnet durch**
einen Schaltkreis, in welchem Anrufprofile gespeichert sind.

13. System nach Anspruch 1,
**gekennzeichnet durch**
einen Schaltkreis, welcher eine Sprachantwortausrüstung aufweiset, welche Fragen stellen und Antworten für erforderliche relevante Identifikationen in der Abwesenheit der Identität und der geografischen Position geben kann,

14. System nach Anspruch 1,
**gekennzeichnet durch**
einen Schaltkreis, in welchem die Rechnungsadresse oder ähnliches ermittelt werden kann.

15. System nach Anspruch 1,
**gekennzeichnet durch**
einen Schaltkreis, in welchem die geografische Position **durch** das Medium eines GPS-Systems oder durch das Medium eines mobilen Telefonsystems ermittelt werden kann.

16. System nach Anspruch 1,
**gekennzeichnet durch**
einen Schaltkreis, in welchem bestimmte geografische Positionen und Gebiete als undefinierbar ausgeschlossen werden können,

17. System nach Anspruch 1,
**gekennzeichnet durch**
einen Schaltkreis, in welchem Informationen von einer Kundendatenbank genommen werden können, so dass wenn ein Kunde anruft, seine bzw. ihre Bedürfnisse aus bereits in der Kundendatenbank gespeicherten Informationen ermittelt werden.

## Revendications

1. Système lié aux télécommunications (1) comprenant un nombre d'appareils téléphoniques pouvant initier et connecter un appel (11, 12, 13) ayant des numéros d'abonnés respectifs (A1, A2, A3), et un nombre d'appareils appelables (21, 22, 23) ayant des numéros d'abonnés respectifs (B1, B2, B3), et une unité de central téléphonique (10) adaptée pour être connectée auxdits appareils, dans lequel ladite unité de central (10) inclut ou est connectée à un moyen (100) pour connecter un appel d'un appareil pouvant initier un appel (11) avec son numéro d'abonné (A1) à un appareil appelé (21) avec son numéro d'abonné (B1) répondant audit appel, dans lequel ledit moyen (100) inclut également un circuit d'identification de numéro A (10E), **caractérisé en ce qu'**un moyen additionnel (200), lié à ladite unité de central (10), est adapté pour fonctionner pour connecter ledit appel reçu sur un numéro de groupe appelable choisi à un appareil appelable, séparé du numéro appelé choisi, conformément à une évaluation de l'identification du numéro A, et des informations/données démographiques stockées et/ou calculées disponibles, liées soit en totalité soit en partie à ladite identification du numéro A ;
**en ce que** le numéro de groupe appelable choisi est le même pour tous les appareils initiant un appel ou au moins les appareils initiant un appel liés au groupe ;
**en ce que** le système inclut un registre (200) dans lequel est effectuée une vérification pour évaluer les informations / données démographiques pour le numéro A concerné ; ladite vérification étant effectuée relativement à chaque appareil appelant et identifié numéro A ; **en ce qu'**au moins certaines desdites informations démographiques sont pondérées ; et **en ce qu'**un appel est effectué vers un appareil appelable qui est lié sans équivoque ou en partie auxdites informations démographiques pondérées.

2. Système selon la revendication 1, **caractérisé en ce que** l'appareil appelable est un d'un nombre d'appareils appelables où tous les appareils se voient allouer une appartenance à un groupe.

3. Système selon la revendication 1 ou 2, **caractérisé en ce que** l'appareil appelable est choisi pour représenter l'appareil qui a une position géographique dans le voisinage immédiat de ces positions géographiques applicables audit appareil appelant.

4. Système selon la revendication 1, **caractérisé en ce que** ledit moyen additionnel (200) inclut une première mémoire, qui stocke un nombre d'appareils appelables avec des numéros d'abonnés associés localisés à l'intérieur d'une zone limitée ou restreinte.

5. Système selon la revendication 1, **caractérisé en ce que** ledit moyen additionnel (200) inclut une deuxième mémoire, dans laquelle les positions géographiques localisées à l'intérieur d'une zone limitée sont stockées.

6. Système selon la revendication 1 ou 5, **caractérisé en ce que** ledit moyen additionnel inclut une troisième mémoire, dans laquelle les informations démographiques concernant généralement des personnes qui ont une adresse de logement à l'intérieur des positions géographiques applicables à l'intérieur d'une zone limitée sont stockées.

7. Système selon la revendication 1, **caractérisé en ce que** ledit moyen additionnel inclut une quatrième mémoire, dans laquelle sont stockées des informations démographiques concernant directement le propriétaire enregistré de l'appareil d'abonné.

8. Système selon la revendication 1, **caractérisé par** un circuit qui est coordonné avec ledit moyen additionnel (200) de façon à permettre qu'un appareil appelable, tel qu'un appareil non occupé, soit appelé en totalité ou en partie sur la base du contenu stocké d'une ou plusieurs mémoires.

9. Système selon la revendication 1 ou 8, **caractérisé en ce qu'**est choisi à l'aide d'un circuit un appareil appelable, tel qu'un appareil non occupé, dont la position géographique stockée dans la mémoire se trouve le plus près de la position géographique stockée dans la mémoire applicable à l'appareil appelant.

10. Système selon la revendication 1, **caractérisé en ce que** dans le cas d'un appareil indiqué qui est occupé, l'appel est dirigé vers un prochain appareil localisé le plus près à l'aide d'un circuit et d'un moyen lié à celui-ci.

11. Système selon la revendication 1, **caractérisé en ce que** différents appareils appelables représentent différents serviles ; et **en ce que** l'appel est connecté à un appareil qui correspond aux informations démographiques indiquées.

12. Système selon la revendication 1, **caractérisé par** un circuit dans lequel des profils d'appel sont stockés.

13. Système selon la revendication 1, **caractérisé par** un circuit qui inclut un équipement de réponse vocale qui peut poser des questions et donner des réponses pour une identification pertinente requise en l'absence d'identité et de position géographique.

14. Système selon la revendication 1, **caractérisé par** un circuit dans lequel l'adresse de facturation ou similaire peut être déterminée.

15. Système selon la revendication 1, **caractérisé par** un circuit dans lequel la position géographique peut être déterminée au moyen d'un système GPS ou au moyen d'un système de téléphonie mobile.

16. Système selon la revendication 1, **caractérisé par** un circuit dans lequel certaines positions géographiques et certaines zones peuvent être exclues comme étant indéfinissables.

17. Système selon la revendication 1, **caractérisé par** un circuit dans lequel des informations peuvent être extraites d'une base de données de clients de sorte que lorsqu'un client appelle, ses exigence sont déterminées à partir d'informations déjà stockées dans la base de données de clients.
